# EUROPEAN PATENT SPECIFICATION

(11) **EP 2 919 626 B1**
(45) Date of publication and mention of the grant of the patent: **28.02.2018**
(21) Application number: 13855546.1
(22) Date of filing: 17.07.2013
(51) Int. Cl.: B29L 23/00, B29C 65/10, B29C 65/00, B29C 53/08, B29C 53/84, A47G 21/18

(54) **DRINKING STRAW**
TRINKSTROHHALM
PAILLE

(30) Priority: 16.11.2012 HU P1200663
(43) Date of publication of application: 23.09.2015
(73) Proprietor: Silman Invest & Trade Ltd., Mahé (SC)
(72) Inventor: ECSERI, Ferenc, 2700 Cegléd (HU); ECSERI, Mónika, 1037 Budapest (HU)
(74) Representative: Kacsuk, Zsófia
(86) International application number: PCT/HU2013/000070
(87) International publication number: WO 2014/076513

(56) References cited:
- EP-A1- 1 415 578
- WO-A1-98/51259
- KR-A- 20100 047 091
- RU-C2- 2 313 260
- US-A- 6 109 538

## Description

### FIELD OF THE INVENTION

The invention relates to a drinking straw for progressively adding active ingredients to liquid passing through the drinking straw.

### BACKGROUND OF THE INVENTION

Drinking straws are known for flavouring or changing the flavour of a liquid passing through the drinking straw. Such drinking straws can impart different flavours (e.g. cocoa, fruit, etc.) to a liquid for example milk.

There are solutions in which the flavouring agent is applied on a portion of the drinking straw and dissolves when this portion is immersed in the liquid. Patent application US 3,615,595 describes such flavouring drinking straw. In another embodiment according to US 3,615,595 the flavouring agent is applied on the inner wall of the drinking straw. A disadvantage of this solution is that dissolution of the flavouring agent thereby the flavouring effect is unsatisfactory.

Patent application US 5,094,861 discloses an improved embodiment of the flavoured drinking straw of US 3,615,595. Here, carriers of flavouring agent are inserted in the drinking straw. Embodying of this drinking straw is complicated, placing the flavouring agent in the straw requires an elaborate method while the flavouring effect is still unsatisfactory.

The solution proposed in patent application US 6,109,538 differs from the earlier known solutions in that a large sized flavouring object is disposed in the lumen of the drinking straw.

A common disadvantage of the aforementioned embodiments is that proportionally to the dissolution of the flavouring agent placed in the interior of the drinking straw the flavouring effect also decreases and the force required to sip the drinking straw varies significantly especially in the latter solution.

Patent application WO 9851259 is directed to an oral active agent delivery device comprising improved flow controllers.

Here, a hollow tubular member containing the active agent formulation and having a fluid passing controller is placed at one end into a fluid and at a second end into a patient's mouth. The active agent is delivered when the patient sips on the end of the tube. This improved solution prevents leakage of the active agent formulation. This document teaches a number of complicated filtering elements that can be inserted in the drinking straw. On the one hand dosing of the active agent according to this solution is complicated on the other hand it is expensive and flavouring of the active agent may be realized at most by flavouring the fluid in which the device is placed.

Effervescent tablets are also generally used in the food and medical industry. Effervescent tablets are tablets that are designed to break down rapidly when they are placed into water or another liquid, releasing carbon dioxide in the process. The rapid breakdown causes the tablet to dissolve into a frothy or fizzy solution, which property is particularly appealing to younger consumers. Such tablets are also extensively used for the administration of minerals (e.g. calcium, magnesium), vitamins and various drugs (medication).

Effervescent tablets are made by compressing the component ingredients into a dense mass, which is packaged in an airtight container or other airtight packaging since otherwise the tablet would react with humidity (water vapor) contained in the air.

The aim of the present invention is to provide a drinking straw which contains one or more effervescent tablets in order to produce a fizzy drink when a neutral liquid, such as water, is drawn through the straw. The inventors have realized that simply disposing effervescent tablets in any of the prior art filled drinking straws does not solve this problem as the effervescent tablet is not stable once the packaging of the straw is opened, however, consumers often wish to consume a beverage over a longer period of time, or use the same straw more than once. Furthermore, if the effervescent tablet sinks to the bottom of the straw immersed in the liquid then it will dissolve too fast. However, if the tablet floats in the liquid, it will rise to the top of the straw and cause inconvenient foaming in the vicinity of the user's mouth.

### SUMMARY OF THE INVENTION

The above problems are overcome by a drinking straw according to claim 1.

Further advantageous embodiments of the invention are defined in the attached dependent claims.

Further details of the invention will be apparent from the accompanying figures and exemplary embodiments.

### BRIEF DESCRIPTION OF DRAWINGS

Fig. 1 a is a schematic perspective view of a first preferred embodiment of a drinking straw according to the invention.
Fig. 1b is a schematic perspective view of a second preferred embodiment of a drinking straw according to the invention.
Fig. 2 is a side view of a preferred embodiment of a nozzle according to the invention.
Fig. 3 is a front view of the nozzle according to Fig. 2.
Fig. 4 is a front view of a pressing tool according to the invention, which is illustrated in the open position surrounding the straw prior to deformation.
Fig. 5 is a front view of the pressing tool according to Fig. 4 illustrated in the closed position surrounding the straw and showing the cross section of a branched portion created by deformation of the straw.
Fig. 6 is a partial cutaway perspective view of a device comprising the nozzle according to Fig. 2 and the pressing tool according to Fig. 4, illustrating the deformation of a second portion of the straw once a first deformed portion has been created in accordance with Fig. 5 and the straw has been filled with a filler.
Fig. 7 is a front view of the device showing the nozzle inserted within the straw and the pressing tool arranged around the not yet filled straw.
Fig. 8 is a front view of the device showing the nozzle inserted within the straw and the pressing tool arranged around the not yet filled but already pressed straw.
Fig. 9 is a schematic perspective view of a third preferred embodiment of a drinking straw according to the invention.

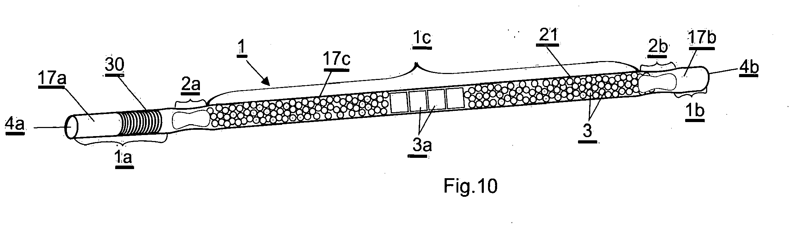

Fig. 10 is a schematic perspective view of a fourth embodiment of a drinking straw according to the invention comprising an angle-adjustable bellows segment.

### DETAILED DESCRIPTION OF PREFERRED EMBODIMENTS

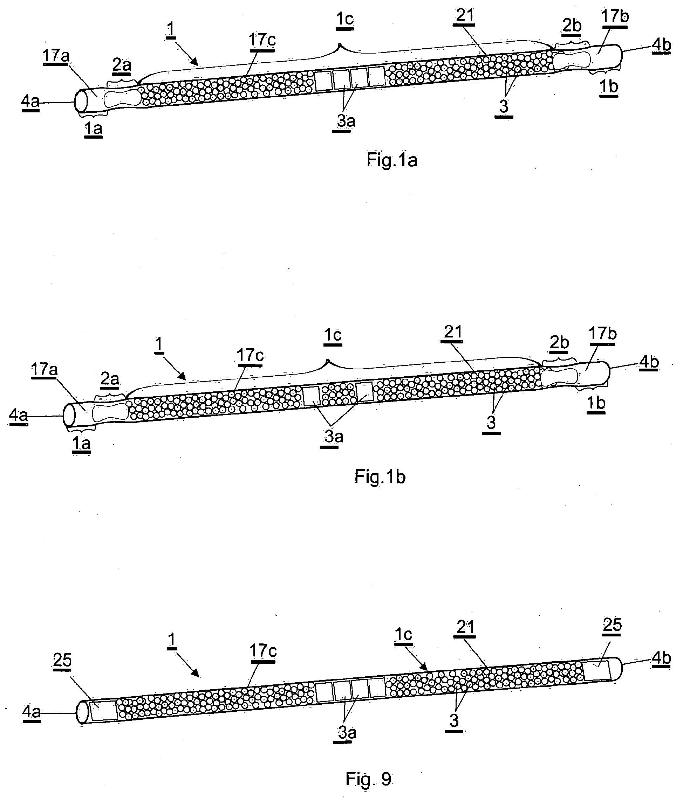

Fig. 1a schematically illustrates a first preferred embodiment of a drinking straw 1 in accordance with the present invention. According to the illustrated embodiment the straw 1 comprises a first tubular end portion 1a, a second tubular end portion 1b, an elongate tubular container portion 1c, a first branched portion 2a connecting the first tubular end portion 1a with the container portion 1c and a second branched portion 2b connecting the second tubular end portion 1b with the container portion 1c. The straw 1 and its portions 1a, 1b, 1c, 2a, 2b are defined by a plastic wall 21 having a first end 4a and a second end 4b. The first tubular end portion 1a is adjacent the first end 4a of the straw 1 while the second tubular end portion 1b is adjacent the second end 4b of the straw 1.

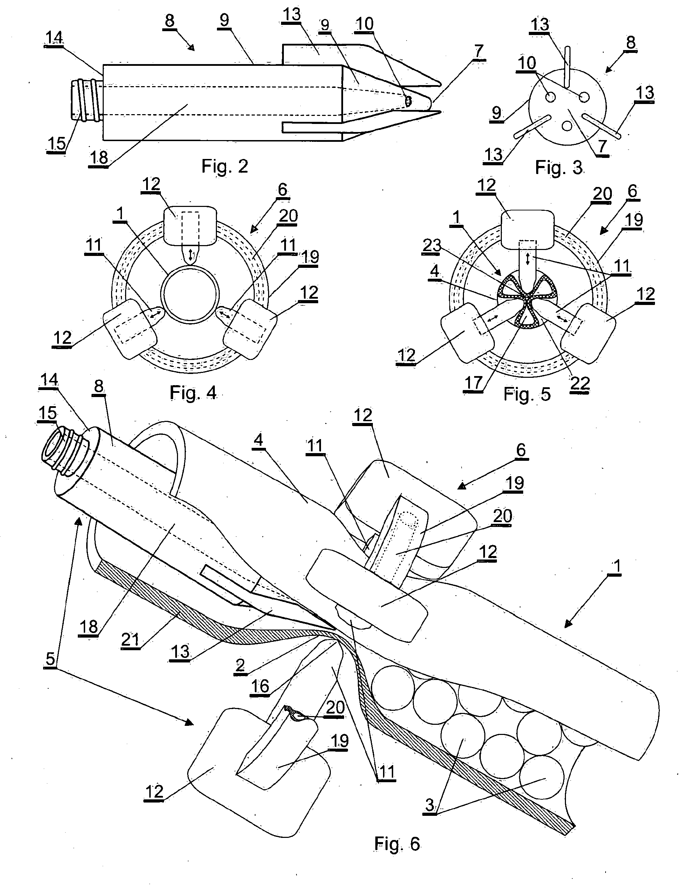

The first and second branched portions 2a, 2b each define at least two but preferably three to five parallel passages 17 (see Fig. 5) that are in fluid communication with a single passage 17a, 17b of the first and second tubular end portion 1a, 1b respectively. The parallel passages 17 of the first and second branched portions 2a, 2b are defined by neighbouring recesses 22 formed in the wall 21 of the straw 1 and an inner seam 23 connecting inner points of the neighbouring recesses 22.

In the present embodiment the elongate container portion 1c also comprises a single passage 17c providing fluid communication between the parallel passages 17 of the first and second branched portions 2a, 2b. At least one effervescent tablet 3a disposed within the passage 17c of the container portion 1c such that a clearance 24 is left between the inner side of the wall 21 and the tablet 3a. The clearance is preferably 0.1 to 1 mm wide (but may be greater too) in case of cylindrical tablets 3a (i.e. this is the difference between the radius of the tablet 3a and of the inner cross section of the passage 17c. In case of tablets 3a having a non-circular cross section (e.g. star shaped tablets or other decorative shapes) the clearance is determined by the deviation of the cross section from a circle. According to the present embodiment four effervescent tablets 3a are disposed approximately at the middle of the container portion 1c and are kept in place by a hygroscopic filler 3 also disposed within the passage 17c of the container portion 1c at both sides of the four tablets 3a.

Some or all of the effervescent tablets 3a may comprise at least one type of active ingredient chosen from the group consisting of flavoring agents, minerals, vitamins, drugs, food additives, proteins. It is also possible to dispose more or less tablets 3a, furthermore, it is also possible to dispose filler 3 between the tablets 3a as well as illustrated in Fig. 1 b.

The hygroscopic filler 3 is an edible food industry product, preferably granules containing sugar. The term "granule" is understood to include all kinds of small grains, particles, granulate materials, pellets, nonpareils, dragees etc. used in the food industry. The granules may have a homogeneous structure or they may comprise one more coatings or layers.

The hygroscopic filler 3 generally comprises spherical (i.e. spherical or close to spherical) particles having an average diameter between 15 to 25% of the inner diameter of the tubular container portion 1c in order to provide a sufficiently large surface area for absorbing humidity, but at the same time being sufficiently large to be retained by the branched portions 2a, 2ba and not to clog the parallel passages 17 thereof during use. In order to render the drinking straw 1 more attractive the hygroscopic filler 3 disposed on the opposite sides of the tablets 3a, and optionally between the tablets 3a, may differ in color, size or shape from each other.

The filler 3 (preferably in the form of granules) may also contain solvable active ingredients that progressively dissolve into a liquid drawn through the straw 1. Such active ingredients may be flavouring substances, edible colorants, vitamins, minerals, food additives and the like. The inventors have found that dissolution of the active ingredients is generally enhanced by the effervescence produced by the tablets 3a.

According to a preferred embodiment the filler 3 is in the form of granules which comprise a core and one or more coatings provided thereon comprising one or more kinds of active ingredients. For example the core may be a sugar seed and a coating comprising one or more active ingredients may be formed thereon by any known technology.

The branched portions 2a, 2b serve as closures that are permeable to liquid but otherwise close off the container portion 1c in order to retain the hygroscopic filler 3 and effervescent tablets 3a therein. The dimensions (in particular cross section) of the filler 3 and the cross section of the parallel passages 17 of the branched portions 2a, 2b are chosen such as to prevent the filler 3 from passing through the parallel passages 17 of the first and second branched portions 2a, 2b but allow liquid to be drawn through the straw 1 thereby retaining the filler 3 in the container portion 1c when the drinking straw 1 is being used. According to a preferred embodiment the filler 3 comprises spherical or near spherical granules in which case the skilled person will easily determine the minimal diameter of the granules that can be retained by the parallel passages 17 having a given size and shape. Otherwise the average cross section of the filler 3 can be taken into account. It is also possible to dimension the parallel passages 17 so as to retain a filler 3 of a given size and shape. Increasing the number of the recesses 22 and thereby the number of the passages 17 formed there between results in more narrow cross section of the passages 17. Furthermore, using thicker spacers 13 increases the cross section of the passages 17 as will be explained later on.

The hygroscopic filler 3 fulfils two main purposes. Firstly, the filler 3 attracts and holds water molecules (thus humidity present in the air) by absorption or adsorption whereby the effervescent tablets 3a are protected even after the packaging of the drinking straw 1 has been opened or even if the packaging is not fully airtight. Secondly the filler 3a serves as spacers in order to keep the tablets 3 at a distance from both ends 17a, 17b. This has for result that the foaming caused by the tablets 3 does not occur directly in the vicinity of the user's mouth who uses one of the tubular end portions 2a, 2b as the mouthpiece, as such foaming might be inconvenient. Another benefit of the spacing provided by the filler 3 is that the tablets 3a are not constantly immersed in the liquid when the user places the other tubular end portion 2b, 2a into the beverage, whereby the beverage can be consumed over a longer period of time yet effervescence occurs all the time the liquid is drawn through the straw 1.

The drinking straw 1 according to the invention can be formed by a device 5 (best shown in Fig. 6) comprising a nozzle 8 (Figs. 2 and 3) and a pressing tool 6 (Figs. 4 and 5). The nozzle 8 comprises a head 9 that is provided with openings 10 near the nozzle end 7 preferably along a circular perimeter and evenly spaced apart from each other. The openings may have a diameter of about 0.3 to 1 mm. Spacers 13 are also provided on the nozzle head 9 which serve to ensure the formation of passages 17 in order to allow liquid communication through the branched portions 2a, 2b. The shape and thickness of the spacers 13 determine the cross section of the passages 17 as will be apparent to the skilled person. Accordingly, at least two but preferably three to five spacers 13 are provided to form a corresponding number of parallel passages 17. Furthermore, preferably the number of the openings 10 also corresponds to the number of the parallel passages 17 to be formed, and the spacers 13 are preferably evenly spaced between the openings 10 as illustrated in Figs. 2 and 3. According to the present embodiment the nozzle 8 comprises a nozzle inlet 14 which is provided with a connector portion 15 that is connected with the openings 10 via an internal channel 18. The connector portion 15 allows for connecting the nozzle 8 to a hot air supply providing preferably hot air of about 150 to 250°C and of about 300 to 700 kPa (3 to 7 bar) pressure, which is conducted to the openings 10 through the channel 18. Other hot fluids than air may be used as well to form the branched portion 2 as will be apparent to the skilled person.

According to the present embodiment the pressing tool 6 comprises chucks 12 and pressing rods 11 inserted therein (see Figs. 4 and 5). The number of the chucks 12 and pressing rods 11 correspond to the number of the parallel passages 17 to be formed. The pressing rods 11 are displaceable in the direction of the arrows indicated in Figs. 4 and 5. Displacement of the pressing rods 11 might be achieved by means of hydraulic or pneumatic action or by any other known means. For example the chucks 12 might be supported by a connector 19 having an inner duct 20 for conducting the actuating medium of the pressing rods 11 to the chucks 12. For example the pressing rods 11 may be held in an initial position by means of springs (not shown).

The method of producing the drinking straw 1 according to the invention and in particular of forming the branched portions 2a, 2b of the drinking straw 1 will be explained with reference to the device 5.

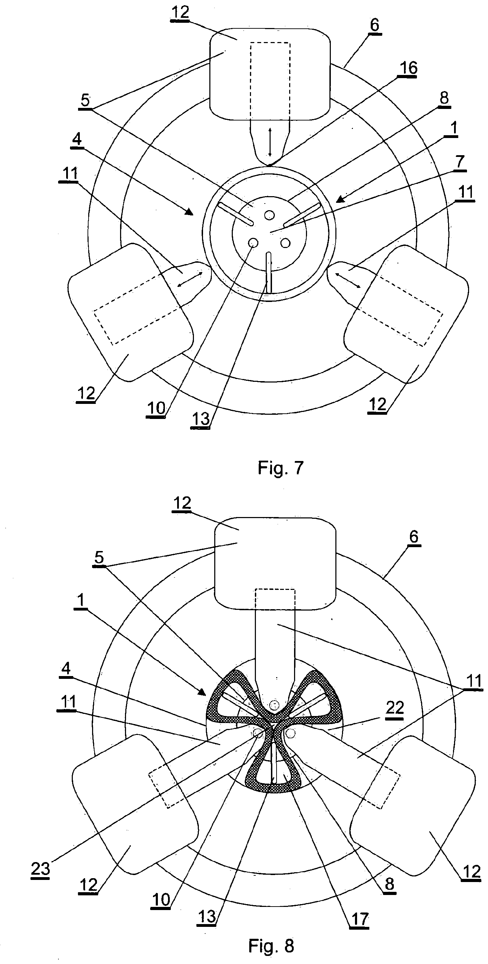

When using the device 5 the nozzle 8 is inserted into the drinking straw 1 such that the spacers 13 reach at least partly into the portion of the drinking straw 1 where the branched portion 2a, 2b is to be formed. The wall 21 of the drinking straw 1, where the branched portion 2a, 2b is to be formed, is fitted between the pressing rods 11 of the pressing tool 6 such that the pressing ends 16 of the pressing rods 11 are each facing a longitudinal axis defined by one opening 10 of the nozzle 8 between two neighbouring spacers 13 as illustrated in Fig. 7. The pressing ends 16 of the pressing rods 11 are somewhat shifted with respect to the openings 10 and the nozzle end 7 in order to allow the pressed regions of the wall 21 of the straw 1 to contact each other or a filling element 3a placed within the straw 1 when the pressing rods 11 are pushed inside.

Formation of the branched portions 2a, 2b is illustrated in Figs. 6 to 8.

Firstly, prior to filling the straw 1 with the filler 3 and the one or more tablets 3a, the first branched portion 2a is formed spaced apart from the first end 4a of the straw 1 via the device 5. The straw 1 is inserted into the pressing tool 6 such that the middle part of the branched portion 2a, 2b to be formed lies between the pressing rods 11 of the pressing tool 6. Following this, the nozzle 8 (Fig. 2) is inserted into the straw 4 such that the nozzle end 7 does not reach the working section of the pressing rods 11 in order to allow the pressing rods 11 to push the wall 21 of the straw inside. The wall 21 of the straw 1 is preferably made from a thermoplastic material, preferably from polypropylene that can be easily deformed when applying heat thereto. The first branched portion 2a is formed by applying heat to the inside of the wall 21 by directing high pressure hot air of about 150 - 250°C, preferably of about 250°C and of about 500 kPa pressure at the wall 21 through the openings 10 of the nozzle 8 for a very short period of time preferably about 0.2 to 0.6 sec, most preferably about 0.5 sec. The temperature and pressure of the hot air is chosen with regard to the thickness and material properties of the wall 21. If the wall 21 is thick then higher temperatures and greater pressure may be used. Generally the hot air is applied for no longer than 1 sec and the pressure is not increased over 700 kPa.

By supplying hot air to the channel 18 of the nozzle 8 at high pressure and directing the hot air at the inner side of the wall 21 of the straw 1 through the openings 10, the regions of the wall 21 facing the pressing rods 11 is heated and plasticized (or melted) for about 0.2 to 0.6 sec, most preferably about 0.5 sec. After this, the heated regions of the wall 21 are pressed against each other via the pressing rods 11 for a time period of about 0.5 to 1.5 sec, preferably for about 1 sec. For example, the pressing rods 11 may be actuated by means of hydraulic or pneumatic force and may be kept in the initial position by spring force. Heating the inner side of the wall 21 of the straw 1 ensures that the wall 21 can be deformed without causing cracks or other damages. By pressing the pressing rods 11 inside recesses 22 are formed in the wall 21 and where the inner points of the recesses 22 meet the plasticized (melted) material bonds thereby creating an inner seam 23. In practice the method can be regarded as spot welding.

The spacers 13 have for function to support the wall 21 of the straw 1 between the pressed locations whereby parallel passages 17 are created between the recesses 22. The shape and size of the parallel passages 17 can be influenced by the shape and dimension of the spacers 13. The spacers 13 preferably reach beyond the nozzle end 7. In order not to require an excessive thinning of the wall 21 at the branched portions 2a, 2b, the spacers 13 are preferably tapered whereby the regions between the pressed locations are also drawn inside and the cross sectional diameter of the branched portions 2a, 2b becomes smaller than the diameter of the tubular end portions 1a, 1b and the container portion 1c.

Once the first branched portion 2a has been created the approximately half of the container portion 1c of the straw 1 is filled with the hygroscopic filler 3 through the second open end 4b of the straw 1. The branched portion 2a stops the filler 3, which is preferably in the form of granules, from falling out through the first open end 4a. Following this one or more effervescent tablets 3a a disposed within the container portion 1c, optionally alternant with more fillers 3 in order to separate the tablets 3a from each other as well. After having disposed the tablets 3 the rest of the container portion is filled with further hygroscopic filler 3. Once the container portion 1c has been filled the second branched portion 2b is created in a similar way as the first branched portion 2a (see Fig. 6).

The branched portions 2a, 2b are preferably spaced apart from the first and second ends 4a, 4b of the straw 1 respectively and their locations are chosen so as to leave sufficiently long tubular end portions 1a, 1b that can serve as a mouthpiece when the user uses the drinking straw 1. The first and second tubular end portions 1a, 1b may be symmetric and the user may use either one as the mouthpiece. According to another preferred embodiment one of the tubular end portions 1a, 1b comprises an angle-adjustable bellows segment 30 which is well known in the art and is conventionally used in so-called bendable straws. In the latter case this tubular end portion 1a, 1b serves as the mouthpiece.

According to a second preferred embodiment illustrated in Fig. 9 the liquid permeable closures retaining the hygroscopic filler 3 and the effervescent tablets 3a are in the form of filters 25 located at the two ends of the container portion 1c. In this case the separate tubular end portions 1a, 1b can be dispensed with and the container portion's 1c ends correspond to the ends 4a, 4b of the straw 1. The filters 25 can be any type of filters generally used in the art, e.g. filter caps disclosed in US 8,334,003 B1 or integral end filters disclosed in US 2012/0228400 A1.

When using the drinking straw 1 the user inserts one end 4b into a preferably neutral beverage such as water, takes the opposite end 4a into his or her mouth, and applies sucking force so as to draw the liquid (beverage) through the straw 1. The liquid enters the container portion 1c through the liquid permeable closure (e.g. through the parallel passages 17 of the second branched portion 2b or the apertures of the end filter 25), which retains the filler 3 and the effervescent tablets 3a. The liquid then passes through the elongate container portion 1c containing the filler 3 and the tablets 3a. As the liquid comes into contact with the tablets 3a effervescence occurs and a fizzy/foamy beverage is produced which may contain active ingredients as well (such as flavouring agents, colorants, food additives, vitamins, drugs, etc.) depending on the composition of the filler 3 and tablets 3a. Furthermore, the solid material of the filler 3 (preferably sugar) may also dissolve. The fizzy/foamy liquid carrying the dissolved active agents and solid materials passes between the particles of the filler 3 separating the tablets 3a from the closure (branched portion 2a or filter 25), whereby excessive foaming is gradually reduced. The liquid then passes through the liquid permeable closure (e.g. the parallel passages 17 of the first branched portion 2a or the apertures of the filter 25) while the filler 3 is prevented from exiting the container portion 1c. The user thus draws fizzy/moderately foamy and/or flavoured or otherwise modified beverage from the upper end 4a of the drinking straw 1.

Various modifications to the above disclosed embodiments will be apparent to a person skilled in the art without departing from the scope of protection determined by the attached claims.

## Claims

1. Drinking straw comprising:
- a plastic wall having an elongate container section;
- liquid permeable closures closing off the container section at both ends;
- at least one effervescent tablet disposed within the container section such that a clearance is left between the inner side of the wall and the at least one tablet;
- a plurality of hygroscopic fillers disposed at both sides of the at least one tablet within the container section, serving as spacers in order to keep the at least one tablet at a distance from both ends.

2. The drinking straw according to claim 1, wherein the closures are branched sections each having at least two parallel passages that are defined by neighbouring recesses formed in the wall and an inner seam connecting the neighbouring recesses; and the dimensions of the fillers and the cross section of the parallel passages are chosen such as to prevent the fillers from passing through the parallel passages of the branched sections.

3. The drinking straw according to claim 2, wherein the wall has two tubular end sections adjacent the branched sections, and at least one tubular end section has a mouthpiece.

4. The drinking straw according to claim 3, wherein the tubular end section having a mouthpiece further comprises an angle-adjustable bellows segment.

5. The drinking straw according to any of claims 1 to 4, wherein more than one effervescent tablets are disposed within the container section and further hygroscopic fillers are disposed between the tablets.

6. The drinking straw according to any of claims 1 to 5, wherein the closures are filters disposed at the two ends of the container section.

7. The drinking straw according to any of claims 1 to 6, wherein the hygroscopic fillers are edible food industry products.

8. The drinking straw according to any of claims 1 to 7, wherein the hygroscopic fillers are sugar pellets.

9. The drinking straw according to any of claims 1 to 8, wherein the hygroscopic fillers are generally spherical having an average diameter between 15 to 25% of the inner diameter of the tubular container section.

10. The drinking straw according to any of claims 1 to 9, wherein the at least one effervescent tablet comprises at least one type of active ingredient chosen from the group consisting of flavoring agents, minerals, vitamins, drugs, food additives, proteins.

## Patentansprüche

1. Trinkstrohhalm, umfassend:
- eine Kunststoffwand, die einen länglichen Behälterabschnitt aufweist;
- flüssigkeitsdurchlässige Verschlüsse, die den Behälterabschnitt abschließen an beiden Enden;
- mindestens eine Brausetablette, die so in dem Behälterabschnitt angeordnet ist, dass ein Zwischenraum zwischen der Innenseite der Wand und der mindestens einen Tablette belassen wird;
- eine Vielzahl hygroskopischer Füllstoffe, die an beiden Seiten der mindestens einen Tablette in dem Behälterabschnitt angeordnet sind, die als Abstandhalter dienen, um die mindestens eine Tablette in einem Abstand von beiden Enden zu halten.

2. Trinkstrohhalm nach Anspruch 1, wobei die Verschlüsse verzweigte Abschnitte sind, die jeder mindestens zwei parallele Durchgänge aufweisen, die durch in der Wand gebildete benachbarte Ausnehmungen und eine die benachbarten Ausnehmungen verbindende innere Naht definiert werden; und die Abmessungen der Füllstoffe und der Querschnitt der parallelen Durchgänge so ausgewählt sind, dass die Füllstoffe daran gehindert werden, durch die parallelen Durchgänge der verzweigten Abschnitte zu passieren.

3. Trinkstrohhalm nach Anspruch 2, wobei die Wand zwei röhrenförmige EndAbschnitte benachbart zu den verzweigten Abschnitten aufweist und mindestens ein röhrenförmiger End-Abschnitt ein Mundstück aufweist.

4. Trinkstrohhalm nach Anspruch 3, wobei der ein Mundstück aufweisende röhrenförmige End-Abschnitt weiter ein winkelverstellbares Faltenbalgsegment aufweist.

5. Trinkstrohhalm nach einem der Ansprüche 1 bis 4, wobei mehr als eine Brausetablette in dem Behälterabschnitt angeordnet ist und weiter hygroskopische Füllstoffe zwischen den Tabletten angeordnet sind.

6. Trinkstrohhalm nach einem der Ansprüche 1 bis 5, wobei die Verschlüsse Filter sind, die an den zwei Enden des Behälterabschnitts angeordnet sind.

7. Trinkstrohhalm nach einem der Ansprüche 1 bis 6, wobei die hygroskopischen Füllstoffe essbare Lebensmittelindustrieprodukte sind.

8. Trinkstrohhalm nach einem der Ansprüche 1 bis 7, wobei die hygroskopischen Füllstoffe (3) Zuckerpellets sind.

9. Trinkstrohhalm nach einem der Ansprüche 1 bis 8, wobei die hygroskopischen Füllstoffe generell kugelförmig sind, wobei sie einen durchschnittlichen Durchmesser zwischen 15 und 25% des Innendurchmessers des röhrenförmigen Behälterabschnitts aufweisen.

10. Trinkstrohhalm nach einem der Ansprüche 1 bis 9, wobei die mindestens eine Brausetablette mindestens einen Typ von aktivem Bestandteil umfasst, der aus der Gruppe ausgewählt ist, bestehend aus Geschmacksstoffen, Mineralstoffen, Vitaminen, Arzneimitteln, Lebensmittelzusatzstoffen, Proteinen.

## Revendications

1. Paille pour boire comprenant :
- une paroi en plastique ayant une section de contenant;
- des bouchons perméables aux liquides fermant la section de contenant aux deux extrémités ;
- au moins une tablette effervescente disposée à l'intérieur de la section de contenant de sorte qu'un espace libre soit laissé entre le côté intérieur de la paroi et l'au moins une tablette;
- une pluralité de charges hygroscopiques disposées des deux côtés de l'au moins une tablette à l'intérieur de la section de contenant, servant d'espaceurs afin de maintenir l'au moins une tablette à distance des deux extrémités.

2. Paille pour boire selon la revendication 1, dans laquelle les bouchons sont des sections ramifiées ayant chacune au moins deux passages parallèles qui sont définis par des évidements voisins ménagés dans la paroi et une soudure intérieure reliant les évidements voisins; et les dimensions des charges et de la section transversale des passages parallèles sont choisies de manière à empêcher les charges de passer à travers les passages parallèles des sections ramifiées.

3. Paille pour boire selon la revendication 2, dans laquelle la paroi a deux sections d'extrémité tubulaires adjacentes aux sections ramifiées, et au moins une section d'extrémité tubulaire comporte un embout.

4. Paille pour boire selon la revendication 3, dans laquelle la section d'extrémité tubulaire comportant un embout comprend en outre un segment en dessous de réglage en angle.

5. Paille pour boire selon l'une quelconque des revendications 1 à 4, dans laquelle plus d'un comprimé effervescent sont disposés dans la section de contenant et d'autres charges hygroscopiques sont disposées entre les comprimés.

6. Paille pour boire selon l'une quelconque des revendications 1 à 5, dans laquelle les bouchons sont des filtres disposés aux deux extrémités de la section de contenant.

7. Paille pour boire selon l'une quelconque des revendications 1 à 6, dans laquelle les charges hygroscopiques sont des produits de l'industrie alimentaire comestible.

8. Paille pour boire selon l'une quelconque des revendications 1 à 7, dans laquelle les charges hygroscopiques sont des pastilles de sucre.

9. Paille pour boire selon l'une quelconque des revendications 1 à 8, dans laquelle les charges hygroscopiques sont globalement sphériques ayant un diamètre moyen compris entre 15 et 25% du diamètre interne de la section de contenant tubulaire.

10. Paille pour boire selon l'une quelconque des revendications 1 à 9, dans laquelle l'au moins un comprimé effervescent comprend au moins un type de principe actif choisi dans le groupe constitué par les agents aromatisants, les minéraux, les vitamines, les médicaments, les additifs alimentaires, les protéines.
